(19) Europäisches Patentamt
European Patent Office
Office européen des brevets

(11) **EP 3 840 253 A1**

(12) **EUROPÄISCHE PATENTANMELDUNG**

(43) Veröffentlichungstag:
**23.06.2021   Patentblatt 2021/25**

(51) Int Cl.:
**H04B 10/112** *(2013.01)*      **H04B 10/118** *(2013.01)*

(21) Anmeldenummer: **19217616.2**

(22) Anmeldetag: **18.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Deutsche Telekom AG**
**53113 Bonn (DE)**

(72) Erfinder:
• **von DAMBROWSKI, Alexander**
**64293 Darmstadt (DE)**
• **WISSEL, Felix**
**64372 Ober-Ramstadt (DE)**

(74) Vertreter: **Nern, Peter-Michael**
**Brandt & Nern Patentanwälte**
**Kekuléstrasse 2-4**
**12489 Berlin (DE)**

(54) **ÜBERTRAGUNG EINES NUTZSIGNALS MIT OPTISCHER FREIRAUMÜBERTRAGUNG UND FEHLERKORREKTUR**

(57)   Die Erfindung ein Verfahren und ein System zur Übertragung eines Nutzsignals, wobei das, über einen zwischen einer ersten Kommunikationsentität (10) und einer zweiten Kommunikationsentität ($11_1$, $11_2$, $11_n$) bestehenden Übertragungsweg übertragene Nutzsignal auf mindestens einer optischen Übertragungsstrecke (3) dieses Übertragungsweges mittels eines mit dem Nutzsignal modulierten optischen Trägersignals durch optische Freiraumübertragung übertragen wird. Hierbei wird vorgeschlagen, zur Korrektur eventueller, durch auf der Übertragungsstrecke (3) auf das optische Trägersignal mit dem Nutzsignal einwirkende äußere Einflüsse auftretender Übertragungsfehler des Nutzsignals senderseitig der mindestens einen optischen Übertragungsstrecke (3) durch einen Sender (6) gemeinsam mit dem das Nutzsignal transportierenden optischen Trägersignal mindestens ein optisches Signal mit einem, hinsichtlich seiner bei der Aussendung gegebenen Beschaffenheit, empfängerseitig der Übertragungsstrecke (3) bekannten Referenzsignal auszusenden. Empfängerseitig der optischen Übertragungsstrecke (3) wird durch einen Vergleich des aus dem eingehenden Gesamtsignal herausgefilterten Referenzsignals mit dessen bei seiner Aussendung bekannter Beschaffenheit ein Korrektursignal errechnet und mittels diesem das ebenfalls aus dem eingehenden Gesamtsignal herausgefilterte Nutzsignal korrigiert.

Fig. 1

EP 3 840 253 A1

**Beschreibung**

Die Erfindung betrifft die Übertragung eines Nutzsignals, das heißt eines Nutzdaten kodierenden Signals, mittels eines mit dem Nutzsignal modulierten Trägersignals über einen Übertragungsweg, der einen als eine Übertragungsstrecke mit optischer Freiraumübertragung ausgebildeten Abschnitt umfasst. Hierbei bezieht sich die Erfindung insbesondere auf die Möglichkeit einer Korrektur von Übertragungsfehlern, welche durch äußere Einflüsse auf der Übertragungsstrecke mit optischer Freiraumübertragung entstehen können.

Ein bevorzugter Anwendungsfall der Erfindung ist die satellitengestützte breitbandige Anbindung von Teilnehmern an das Internet unter Nutzung der Satellitentechnik. Hierbei wird ein jeweiliges Nutzsignal zwischen dem Internet und den Teilnehmern (also zwischen jeweiligen technischen Einrichtungen des Internets, wie insbesondere Server, und technischen Einrichtungen der Teilnehmer) über eine leitungsbasiert (mindestens ein elektrisches Kabel, vorzugsweise aber mindestens ein Kabel mit optischen Lichtwellenleitern) an das Internet angebundene Bodenstation und über eine Satellitenstation übertragen, wobei die Übertragung des Nutzsignals zumindest zwischen der Satellitenstation und der mindestens einen, gewissermaßen über einen direkten Festnetzzugang zum Internet verfügenden Bodenstation mittels optischer Freiraumübertragung erfolgt. Zwischen der Satellitenstation und den Teilnehmern werden die Nutzdaten typischerweise funkgestützt, das heißt mit Hilfe eines RF-Trägersignals, übertragen. Gegenstände der Erfindung sind ein Verfahren zur Übertragung eines Nutzsignal über einen eine Übertragungsstrecke mit optischer Freiraumübertragung umfassenden Übertragungsweg bei Korrektur eventueller auf der Übertragungsstrecke mit optischer Freiraumübertragung auftretender Übertragungsfehler sowie ein zur Durchführung des Verfahrens geeignetes Übertragungssystem.

Im Hinblick auf den bevorzugten Anwendungsfall einer satellitengestützten breitbandigen Anbindung von Teilnehmern an das Internet sollen sich die nachfolgenden Ausführungen zum Stand der Technik sowie zur Erläuterung der Erfindung im Wesentlichen auf diesen Anwendungsfall beziehen, ohne dass damit eine Beschränkung der Erfindung verbunden wäre.

Die Versorgung von Teilnehmern mit breitbandigem Internet ist insbesondere in dünn besiedelten Gebieten eine große Herausforderung. Hierbei ist zu berücksichtigen, dass sich die Bereitstellung von Zugangsnetzen für die Anbindung an das Internet durch einen flächendeckenden Glasfaserausbau auch in entlegenere Gebiete nicht wirtschaftlich realisieren lässt. Um jedoch auch dünn besiedelte beziehungsweise entlegenere Gebiete breitbandig an das Internet anbinden zu können, stellt die satellitengestützte Übertragung von Nutzdaten eine bekannt gewordene, sich auch bereits im praktischen Einsatz befindende Möglichkeit dar.

Hierbei wird der Datenverkehr zwischen dem Internet und eine entsprechende Zugangstechnik nutzenden Teilnehmern über eine über Kabel (elektrisches und/oder optisches Kabel, vorzugsweise per Glasfaser) an das Internet angebundene Bodenstation und über eine den Datenverkehr bündelnde Satellitenstation geführt. Bei den bisher in der Praxis anzutreffenden, diese Übertragungstechnik nutzenden Übertragungssystemen werden die Daten sowohl zwischen den Teilnehmern und der Satellitenstation als auch zwischen der Satellitenstation und der über Kabel an das Internet angebundenen Bodenstation funkgestützt übertragen. Allerdings wird davon ausgegangen, dass insbesondere zwischen der Bodenstation und der Satellitenstation die perspektivisch benötigte Bandbreite zumindest durch eine ausschließliche Nutzung der funkgestützten Übertragung nicht mehr sichergestellt werden kann.

Seit einiger Zeit werden daher Lösungsansätze verfolgt, gemäß denen die Übertragung von Nutzsignalen mit Nutzdaten zwischen der Bodenstation und der Satellitenstation mittels eines optischen Trägersignals, das heißt mittels Licht, im Wege einer optischen Freiraumübertragung, erfolgt. Bezüglich einer solchen optischen Übertragungsstrecke zwischen der Bodenstation und der Satellitenstation spricht man auch von einem optischen Feeder Link oder von einen GEO-Feeder Link. Der optische Feeder Link übernimmt dabei die Rolle einer hochbitratigen Anbindung eines Netzelements, nämlich der Satellitenstation an die über Kabel/Leitung(en) mit dem Internet verbundene Bodenstation.

Als Trägersignal wird ein durch einen Laser ausgesendetes Lichtsignal verwendet. Allerdings unterliegt dieses optische Trägersignal auf der Übertragungsstrecke zwischen der Bodenstation und der Satellitenstation erheblichen äußeren Einflüssen, welche zu Übertragungsfehlern in den mit seiner Hilfe übertragenen Nutzsignal und damit in den Nutzdaten führen können. Dabei wird die Übertragung des Lasersignals durch atmosphärische Störungen beeinträchtigt, welche auf der jeweiligen Empfangsseite - es handelt sich um ein bidirektionales Übertragungssystem, so dass die Bodenstation und die Satellitenstation sowohl als Sender als auch als Empfänger arbeiten - zu einem Rauschen führen, welches ohne entsprechende Korrekturmaßnahmen zu Fehlern bei der Demodulation der Nutzdaten und ihrer Weiterverarbeitung führt.

Ursache für die angesprochenen Störungen ist die sogenannte Szintillation, gewissermaßen eine Art scheinbares Flackern des als Träger verwendeten Lasersignals aufgrund äußerer, das heißt atmosphärischer Einflüsse. Entsprechende Szintillationseffekte entstehen durch lokaldynamische Erscheinungen in der Atmosphäre, beispielsweise bedingt durch Luftdruckschwankungen oder Schwankungen der Luftfeuchtigkeit, welche einen dynamisch veränderlichen Brechungsindex auf der Übertragungsstrecke zur Folge haben. Maßnahmen, wie sie beispielsweise in der durch diese Szintillationseffekte ebenfalls betroffenen optisch basierten Astronomie zum Einsatz gelangen, kommen jedoch für die Verwendung in Satellitenstationen zur Nutzdatenübertragung aufgrund der bei Satelliten bestehenden Beschränkungen bezüglich des Bauraums und des möglichst niedrig zu haltenden Gewichts der Kommunikationssatelliten nicht in Betracht. Deshalb wird im Zusammenhang mit der satellitengestützten Datenübertragung unter Nutzung des Prinzips der optischen Freiraumübertragung über andere Möglichkeiten zur Fehlerkorrektur nachgedacht.

Einen insoweit bekannt gewordenen Korrekturmechanismus stellt das Prinzip der Transmitter Diversity dar. Hierbei werden senderseitig mehrere Transmitter verwendet, die das jeweils gleiche optische Signal voneinander unabhängig aussenden. Eine entsprechende empfängerseitig (zum Beispiel in der Satellitenstation) vorgesehene Empfangslogik verarbeitet die mindestens zwei, durch Transmitter der sendenden Station (zum Beispiel Bodenstation) ausgesendeten gleichen optischen Signale, welche auf ihrem Weg zur Satellitenstation jeweils unterschiedlichen Einflüssen ausgesetzt sind. Aufgrund der mindestens zwei im Vergleich untereinander unterschiedlich beeinflussten Empfangssignale können mittels der empfängerseitigen Logikeinheit die auftretenden Übertagungsfehler weitgehend eliminiert werden. Die senderseitig (an der Bodenstation) erforderlichen zwei oder mehr Transmitter können bei diesem Korrekturprinzip in einem vergleichsweise geringen Abstand voneinander angeordnet werden, da atmosphärische Störungen typischerweise stark lokal begrenzt sind.

Gemäß einer Weiterentwicklung des zuvor erläuterten Prinzips, bezeichnet als Phase-Division-in-bit-Time (siehe dazu C. Fuchs et al. "Transmitter Diversity with Phase-Division for Optical Feeder links" in ITG Fachbericht Photonische Netze, S. 19 ff, Leipzig 2019), werden ebenfalls mehrere Transmitter eingesetzt und zusätzlich als Modulationsverfahren die Phasenmodulation verwendet, um durch Interferenzen entstehende Signalverluste auszugleichen.

Nachteilig bei beiden Prinzipien ist das Erfordernis der Installation von mehreren Transmittern beziehungsweise Sendern. Während dies in Bezug auf die Bodenstation lediglich ein Aufwandsproblem darstellt, ergeben sich hierdurch aufgrund der bei der Satellitenstation bestehenden, bereits angesprochenen Beschränkungen im Hinblick auf Platz und Gewicht, zusätzliche Nachteile.

Aufgabe der Erfindung ist es, eine alternative Lösung zur Übertragung von Nutzdaten kodierenden Nutzsignalen unter Verwendung der optischen Freiraumübertragung bereitzustellen, welche insbesondere eine effiziente Korrektur der an dem jeweilige Nutzsignal durch äußere Einflüsse auf das optische Trägersignal entstehenden Übertagungsfehler ermöglicht. Hierfür sollen ein entsprechendes Verfahren und ein zur Durchführung des Verfahrens geeignetes System angegeben werden.

Die Aufgabe wird durch ein Verfahren mit den Merkmalen des Patentanspruchs 1 gelöst. Ein die Aufgabe lösendes Übertragungssystem wird durch den ersten Sachanspruch charakterisiert. Jeweilige vorteilhafte Aus- und Weiterbildungsformen der Erfindung sind durch die Unteransprüche gegeben.

Gemäß der Aufgabe und den vorstehenden Ausführungen bezieht sich das vorgeschlagene Verfahren auf die Übertragung, nämlich insbesondere auf die breitbandige Übertragung von Nutzsignalen, wobei ein jeweiliges, über einen zwischen einer ersten Kommunikationsentität und einer zweiten Kommunikationsentität bestehenden Übertragungsweg übertragenes Nutzsignal auf mindestens einer Übertragungsstrecke (einem Abschnitt) dieses Übertragungsweges mittels eines mit dem Nutzsignal modulierten optischen Trägersignals durch optische Freiraumübertragung übertragen wird. Hierbei werden eventuelle Übertragungsfehler des Nutzsignals, welche durch auf der vorgenannten mindestens einen optischen Übertragungsstrecke auf das optische Trägersignal mit dem Nutzsignal einwirkende äußere Einflüsse entstehen können, korrigiert.

Erfindungsgemäß wird dazu vorgeschlagen, dass jeweils senderseitig der mindestens einen optischen Übertragungsstrecke mit optischer Freiraumübertragung durch einen Sender gemeinsam mit dem das Nutzsignal transportierenden optischen Trägersignal mindestens ein optisches Signal mit einem Referenzsignal ausgesendet wird, wobei dessen Beschaffenheit bei seiner Aussendung - also die Beschaffenheit des Referenzsignals - empfängerseitig bekannt ist. Empfängerseitig der mindestens einen optischen Übertragungsstrecke wird dann durch einen Vergleich des aus dem eingehenden Gesamtsignal herausgefilterten Referenzsignals mit dessen bei seiner Aussendung bekannter Beschaffenheit ein Korrektursignal errechnet. Dieses Korrektursignal wird schließlich auf das ebenfalls aus dem eingehenden Gesamtsignal herausgefilterte Nutzsignal angewendet und hierdurch das Nutzsignal mit Nutzdaten unter Eliminierung eventueller aufgrund der äußeren Einflüsse auf der Übertragungsstrecke entstandener Übertragungsfehler korrigiert.

Nur vorsorglich sei an dieser Stelle angemerkt, dass es sich bei dem mindestens einen optischen, das Referenzsignal transportierenden Signal selbstverständlich auch um ein Trägersignal, nämlich um ein Trägersignal für das Referenzsignal, handelt. Nur zur besseren Unterscheidbarkeit wird jedoch im Kontext der Beschreibung der Erfindung und der Patentansprüche im Zusammenhang mit dem das Nutzsignal transportierenden Signal von einem (optischen) Trägersignal und bezüglich des das Referenzsignal transportierenden Signals lediglich von einem optischen Signal gesprochen.

Unter einem Nutzsignal wird im Zusammenhang mit der hier erfolgenden Beschreibung der Erfindung ein Signal verstanden, welches Sprachsignale in Form digitaler Daten oder durch computerbasierte Endgeräte verarbeitbare Daten kodiert. Letzteres kann sich zum Beispiel auf Steuerdaten, Daten kryptographischer Schlüssel oder sonstige Nutzdaten, wie beispielsweise auch Daten zur Übertragung von Internetinhalten, beziehen. Der vorstehend und in den Patentansprüchen verwendete Begriff "Kommunikationsentität" kann sich gleichermaßen auf ein Telekommunikationsendgerät, auf ein computerbasiertes Endgerät oder auch auf ein Kommunikationsnetz, wie ein lokales Netzwerk von Endgeräten (LAN) oder das Internet, beziehen.

Im Hinblick auf das zuvor erläuterte Verständnis des Begriffs beziehungsweise der Kategorie "Kommunikationsendgerät" sowie auf einen bevorzugten Verwendungszweck kann sich die Erfindung gemäß einem möglichen Aspekt auf die satellitengestützte breitbandige Anbindung von Teilnehmerendgeräten an das Internet beziehen. Hierbei erfolgt die Übertragung von Nutzsignalen zwischen dem Internet, als der in diesem Falle ersten Kommunikationsentität, und den Teilnehmern, als jeweils zweite Kommunikationsentität (gemeint sind selbstverständlich jeweilige technische Einrichtungen der Teilnehmer, wie Internetzugangseinrichtungen oder Endgeräte, wobei zur sprachlichen Vereinfachung - auch in den Patentansprüchen - von "Teilnehmern gesprochen wird), über mindestens eine über Kabel (elektrisch und/oder optisch) an das Internet angebundene Bodenstation und über eine Satellitenstation. Gemäß dem eingangs beschriebenen Stand der Technik erfolgt hierbei die Übertragung der Nutzsignale zumindest auf der Übertragungsstrecke zwischen der mindestens einen Bodenstation und der Satellitenstation in beiden Übertragungsrichtungen im Wege einer optischen Freiraumübertragung. Von mindestens einer Bodenstation wird insoweit gesprochen, als seitens der Satellitenstation gegebenenfalls auch der Datenverkehr mit mehreren Bodenstationen gebündelt werden kann, welche im Hinblick auf territorial unterschiedliche Wetterverhältnisse an unterschiedlichen Standorten angeordnet und dabei zum Beispiel wechselweise genutzt werden können.

Erfindungsgemäß erfolgt hierbei sowohl seitens der mindestens einen Bodenstation als auch seitens der Satellitenstation jeweils eine gemeinsame Aussendung des jeweiligen, ein Nutzsignal transportierenden optischen Trägersignals und des mindestens einen optischen Signals mit dem Referenzsignal. Zudem erfolgt erfindungsgemäß jeweils empfängerseitig, das heißt beidseits der bidirektional genutzten Übertragungsstrecke mit optischer Freiraumübertragung und somit wiederum sowohl in der mindestens einen Bodenstation als auch in der Satellitenstation, eine Korrektur des jeweils aus dem eingehenden Gesamtsignal herausgefilterten Nutzsignals. Diese Korrektur erfolgt gemäß dem Grundgedanken der Erfindung mittels des durch den Vergleich des jeweils aus dem eingehenden Gesamtsignal herausgefilterten mindestens einen Referenzsignals mit dessen bei der Aussendung bekannten Beschaffenheit errechneten Korrektursignals.

Im Zusammenhang mit der digitalen Vorverarbeitung auszusendender optischer Signale ist es verhältnismäßig einfach, ein zusätzliches konstantes Referenzsignal zu erzeugen und dieses gemeinsam mit einem ein Nutzsignal transportierenden optischen Trägersignal auszusenden. Hierbei ist lediglich sicherzustellen, dass bei der digitalen Vorverarbeitung der Abstand zwischen dem optischen Trägersignal und dem Referenzsignal nicht zu groß ist, da sonst das Gesamtspektrum beeinflusst wird, was zu Beeinträchtigungen führen könnte. Es ist also bei der optischen Kopplung darauf zu achten, dass das Trägersignal für das modulierte Nutzsignal und das mindestens eine, das Referenzsignal transportierende optische Signal bezüglich der relevanten Parameter gleichwertig sind.

Letzteres bezieht sich etwa auf die Intensität der Signale, aber auch auf die Wellenlängen einerseits des optischen Trägersignals mit dem Nutzsignal und andererseits des mindestens einen optischen Signals mit dem Referenzsignal. Vorzugsweise sollte die Wellenlänge des optischen Signals für das Referenzsignal sich um maximal 10 % von der Wellenlänge des optischen Trägersignals für das Nutzsignal unterscheiden.

Grundsätzlich käme als Referenzsignal eine einfache glatte Sinusschwingung in Betracht. Vorzugsweise werden jedoch auch in dem Referenzsignal Daten kodiert, welche im Falle einer auf dem Übertragungsweg zwischen dem Trägersignal mit dem Nutzsignal und dem optischen Signal mit dem Referenzsignal entstehenden Verschiebung dazu genutzt werden können, das optische Trägersignal mit Nutzsignal wieder mit dem Referenzsignal zu synchronisieren.

Gemäß einer besonders vorteilhaften Weiterbildung des Verfahrens kann es vorgesehen sein, dass gemeinsam mit dem das Nutzsignal transportierenden optischen Trägersignal mehrere Referenzsignale ausgesendet werden. Hierdurch lässt sich die Genauigkeit des empfängerseitig errechneten Korrektursignals erhöhen. Beispielsweise ist es denkbar, gemeinsam mit dem optischen Trägersignal für das Nutzsignal ein optisches Signal mit einem Referenzsignal auszusenden, dessen Wellenlänge um maximal 10 % kleiner ist als die des Trägersignals für das Nutzsignal sowie außerdem ein bezüglich der Wellenlänge um maximal 10 % oberhalb des Trägersignals für das Nutzsignal liegendes optisches Signal mit einem Referenzsignal.

Ein die Aufgabe lösendes, zur Durchführung des zuvor erläuterten Verfahrens geeignetes System zur breitbandigen Übertragung von Nutzsignalen umfasst zunächst zumindest eine erste Kommunikationsentität, eine zweite Kommunikationsentität und einen Übertragungsweg zur Übertragung eines Nutzsignals zwischen den vorgenannten Kommunikationsentitäten in zumindest einer, aber typischerweise in beiden Übertragungsrichtung(en). Hierbei wird das Nutzsignal auf mindestens einer optischen Übertragungsstrecke des Übertragungsweges zwischen zwei Übertragungsstationen mittels eines mit dem Nutzsignal modulierten optischen Trägersignals durch optische Freiraumübertragung übertragen. Je nachdem, ob das System beziehungsweise der Übertragungsweg unidirektional oder bidirektional ausgebildet ist, handelt es sich bei den vorgenannten Übertragungsstationen um eine Sendestation und um eine Empfangsstation oder aber um zwei jeweils als Sende- und Empfangsstation ausgebildete Übertragungsstationen.

In jedem Falle sind jedoch die beiden Übertragungsstationen an den Enden der Übertragungsstrecke mit optischer Freiraumübertragung zur Korrektur eventueller, durch äußere Einflüsse auf der vorgenannten optischen Übertragungsstrecke entstehender Übertragungsfehler ausgebildet. Eine als Sendestation ausgebildete Übertragungsstation umfasst hierzu:

1. mindestens einen optischen Sender zur gemeinsamen Aussendung eines optischen Trägersignals mit einem Nutzsignal und mindestens eines optischen Signals mit einem, hinsichtlich seiner bei der Aussendung gegebenen Beschaffenheit empfängerseitig, das heißt seitens der jeweils anderen Übertragungsstation, bekannten Referenzsignal;

2. mindestens zwei Signalquellen, nämlich eine erste Signalquelle für das Nutzsignal und mindestens eine zweite Signalquelle zur Erzeugung und Ausgabe eines Referenzsignals;

3. einen oder mehrere Signalprozessoren zur Verarbeitung der Ausgangssignale der mindestens zwei Signalquellen und zur Ansteuerung des optischen Senders zur gemeinsamen Aussendung eines mit dem Nutzsignal modulierten optischen Trägersignals und mindestens eines optischen Signals mit einem Referenzsignal.

Eine als Empfangsstation auf der anderen Seite der Übertragungsstrecke mit optischer Freiraumübertragung ausgebildete Übertragungsstation umfasst:

1. einen Empfänger und ein Filter zum Ausfiltern einerseits des Nutzsignals und andererseits des mindestens einen Referenzsignals aus dem durch den Empfänger dieser Übertragungsstation empfangenen Gesamtsignal;

2. eine Verarbeitungseinrichtung zur Errechnung eines Korrektursignals durch Vergleichen des mindestens einen aus dem empfangenen Gesamtsignal herausgefilterten Referenzsignals mit dessen bei seiner Aussendung bekannter Beschaffenheit sowie zur Korrektur des aus dem Gesamtsignal herausgefilterten Nutzsignals durch Anwendung dieses errechneten Korrektursignals auf das Nutzsignal.

Sofern die Übertragungsstrecke mit optischer Freiraumübertragung und damit auch der Übertragungsweg zwischen der ersten Kommunikationsentität und der zweiten Kommunikationsentität insgesamt bidirektional ausgebildet sind, weisen selbstverständlich beide Übertragungsstationen an den Enden der Übertragungsstrecke mit optischer Freiraumübertragung alle vorgenannten Komponenten auf, da diese dann jeweils als kombinierte Sende- und Empfangsstation ausgebildet sind oder eine solche umfassen. Unabhängig von einer unidirektionalen oder bidirektionalen Ausbildung kann der Übertragungsweg gegebenenfalls auch insgesamt nur aus einer Übertragungsstrecke mit optischer Freiraumübertragung bestehen. In diesem Falle handelt es sich bei der ersten Kommunikationsentität und bei der zweiten Kommunikationsentität um die in zuvor erläuterter Weise ausgebildeten Übertragungsstationen, welche entweder einerseits als Sendestation und andererseits als Empfangsstation oder aber als kombinierte Sende- und Empfangsstationen ausgebildet sind.

Ein wesentlicher Vorteil des erfindungsgemäßen Lösung ist darin zu sehen, dass jedenfalls zur Fehlerkorrektur jeweils senderseitig der Übertragungsstrecke mit optischer Freiraumübertragung nur ein optischer Sender (Transmitter), das heißt nur ein Laser benötigt wird. Anders als bei dem eingangs angesprochenen Prinzip der Transmitter Diversity wird dabei das Trägersignal mit dem aufmodulierten, entsprechende Nutzdaten kodierenden Nutzsignal nur ein Mal ausgesendet. Das Aussenden dieses Signals erfolgt zwar gemeinsam mit mindestens einem anderen, ein Referenzsignal transportierenden optischen Signal, allerdings mittels nur eines, das heißt ein und desselben optischen, durch einen Laser realisierten Senders (Transmitters). Die Erfindung macht es sich hierbei zunutze, dass - wie bereits früher ausgeführt - eine solche gemeinsame Aussendung wenigstens zweier (beispielsweise hinsichtlich Intensität und Wellenlänge ähnlicher) Signale durch deren zur Ansteuerung des optischen Senders mittels Signalprozessoren (DSP) erfolgende digitale Vorverarbeitung vergleichsweise einfach zu bewerkstelligen ist.

Entsprechend dem bevorzugten Einsatzzweck ist das erfindungsgemäße System gemäß einer möglichen Ausbildungsform als ein System zur satellitengestützten breitbandigen Anbindung von Teilnehmern (teilnehmerseitiger Technik) an das Internet ausgebildet. Das System weist hierbei einen bidirektionalen Übertragungsweg zur Übertragung von Nutzsignalen zwischen dem Internet als der ersten Kommunikationsentität und den Teilnehmern als der jeweiligen zweiten Kommunikationsentität auf. Bestandteil des Übertragungsweges ist eine zwischen einer über Kabel (das heißt über mindestens ein elektrisches und/oder über mindestens ein optisches Kabel mit Lichtwellenleitern) an das Internet angebundenen Bodenstation und einer Satellitenstation ausgebildete Übertragungsstrecke mit optischer Freiraumübertragung. Dabei sind sowohl die Bodenstation als auch die Satellitenstation als kombinierte Sende- und Empfangsstationen im zuvor beschriebenen Sinne, also zur Korrektur eventueller auf der Übertragungsstrecke mit optischer Freiraumübertragung entstehender Übertragungsfehler des Nutzsignals ausgebildet oder umfassen jeweils eine derartige Sende- und Empfangsstation.

Nachfolgend sollen anhand von Zeichnungen nochmals Aspekte der Erfindung erläutert und ein Ausführungsbeispiel gegeben werden. In den zugehörigen Zeichnungen zeigen:

Fig. 1: einen Teil eines erfindungsgemäßen Systems gemäß einer möglichen Ausgestaltungsform,

Fig. 2: ein mögliches, den in der Fig. 1 gezeigten Teil umfassendes Gesamtsystem,

Fig. 3: eine mögliche Ausprägung eines zur Umsetzung der Erfindung generierten Referenzsignals.

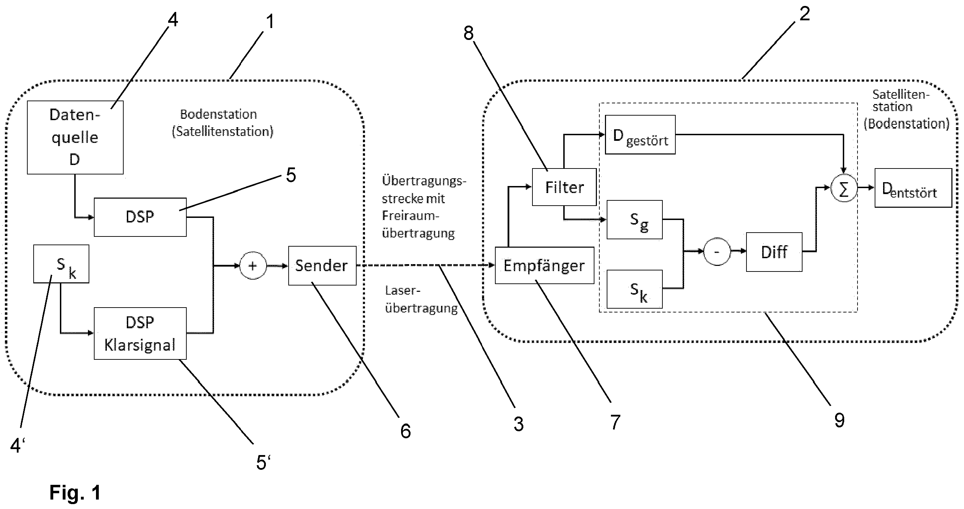

Die Fig. 1 zeigt einen Teil eines erfindungsgemäßen Systems entsprechend einer möglichen Ausbildungsform. Es handelt sich hierbei um die Blockschaltbilder zweier durch eine optische Übertragungsstrecke mit optischer Freiraumübertragung verbundener Übertragungsstationen 1, 2, nämlich einer Sendestation (links im Bild) und einer Empfangsstation (rechts im Bild).

Bestandteile der beispielhaft gezeigten Sendestation sind zwei Signalquellen 4, 4'. Es handelt sich hierbei um eine Signalquelle 4 für das Nutzsignal und eine Signalquelle 4' für ein Referenzsignal. Die Signale beider Signalquellen 4, 4' werden jeweils mittels eines digitalen Signalprozessors 5, 5' (DSP) digital vorverarbeitet und einem Sender 6 zur gemeinsamen Aussendung zugeführt. Die von dem Sender 6 ausgesendeten Signale werden dann im Wege einer optischen Freiraumübertragung über die Übertragungsstrecke 3 mittels Laser zu der rechts im Bild gezeigten Empfangsstation übertragen.

Hier, bei der Empfangsstation, erfolgt zunächst an einem Empfänger 7 eine optisch-elektrische Umsetzung des über die Übertragungsstrecke 3 mit optischer Freiraumübertragung empfangenen Gesamtsignals. Aus diesem Gesamtsignal werden dann durch ein Filter 8 einerseits das Nutzsignal und andererseits das Referenzsignal herausgefiltert. Das herausgefilterte Referenzsignal wird mit seiner empfängerseitig für den Zeitpunkt seiner Aussendung bekannten Beschaffenheit (Klarsignal) verglichen. Aufgrund der während der Übertragung über die Übertragungsstrecke 3 mit optischer Freiraumübertragung typischerweise auf das Referenzsignal einwirkenden äußeren Einflüsse weist das aus dem Gesamtsignal herausgefilterte Referenzsignal Verzerrungen auf. Im Wege des durch die Verarbeitungseinrichtung 9 erfolgenden Vergleichs mit der bekannten ursprünglichen Beschaffenheit des Referenzsignals (Klarsignal) bei seiner Aussendung lässt sich ein Differenz- beziehungsweise Korrektursignal gewinnen. Dieses Korrektursignal wird dann durch die Verarbeitungseinrichtung 9 auf das ebenfalls aus dem Gesamtsignal herausgefilterte Nutzsignal angewandt, so dass gegebenenfalls in dem Nutzsignal enthaltene Übertragungsfehler, welche weitgehend den auch beim Referenzsignal entstehenden Fehlern (Verzerrungen) entsprechen, korrigiert werden und am Ausgang der in der empfängerseitigen Übertragungsstation 2 ausgebildeten Verarbeitungseinheit 9 ein entstörtes Nutzsignal zur Verfügung steht.

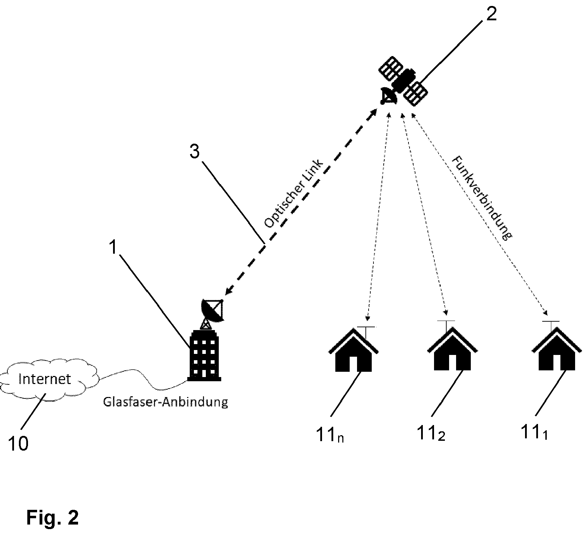

Entsprechend den zur Orientierung angegebenen Beschriftungen in der Fig. 1 sei angenommen, dass es sich bei den im Blockschaltbild gezeigten Übertragungsstationen 1, 2 (Sendestation links und Empfangsstation rechts) um eine Bodenstation 1 und um eine Satellitenstation 2 eines in der Fig. 2 in seiner Gesamtheit, jedoch auch nur in schematischer Darstellung gezeigten Systems zur breitbandigen Anbindung von Teilnehmern, an das Internet handelt. Insoweit wird in der Fig. 1 in Bezug auf das in der Fig. 2 gezeigte System nur eine Übertragungsrichtung, nämlich die Übertragungsrichtung von der Bodenstation 1 zur Satellitenstation 2, betrachtet.

Selbstverständlich wird jedoch der Übertragungsweg zwischen dem Internet als einer ersten Kommunikationsentität 10 und den Teilnehmern als jeweils einer zweiten Kommunikationsentität $11_1$, $11_2$, $11_n$ bidirektional ausgebildet sein. Demgemäß handelt es sich sowohl bei der Bodenstation 1 als auch bei der Satellitenstation 2 jeweils um kombinierte Sende- und Empfangsstationen, so dass im Grunde neben die Struktur gemäß der Fig. 1 mit den Blockschaltbildern für eine Sendestation und für eine Empfangsstation nochmals eine identische Struktur mit umgekehrter Beschriftung, das heißt "Bodenstation" rechts (= Empfangsstation) und "Satellitenstation" rechts (= Sendestation) zu setzen beziehungsweise zu denken wäre, was durch die nochmals in Klammern gesetzten Angaben "Satellitenstation" und "Bodenstation" zum Ausdruck gebracht werden soll.

Wie bereits ausgeführt, zeigt die Fig. 2 das erfindungsgemäße System in seiner Ausprägung als System zur breitbandigen Anbindung von Teilnehmern an das Internet nochmals in Gänze. Hierbei besteht zwischen dem Internet, als erster Kommunikationsentität 10, und den Teilnehmern als jeweils zweiter Kommunikationsentität $11_1$, $11_2$, $11_n$ ein bidirektionaler Übertragungspfad, welcher eine zwischen der Bodenstation 1 und der Satellitenstation 2 ausgebildete Übertragungsstrecke 3 mit optischer Freiraumübertragung umfasst. Zwischen der Satellitenstation 2 und den Teilnehmern (der jeweils zweiten Kommunikationsentität $11_1$, $11_2$, $11_n$) wird das jeweilige Nutzsignal mittels eines Funkträgersignals übertragen.

Vergleichbare Konstellationen können, abseits der Satellitentechnik auch im Zusammenhang mit der Kommunikation über so genannte "high altitude networks", zum Beispiel realisiert durch Zeppeline oder Ballons, oder im Zusammenspiel mit Drohnen als Relais-Stationen anzutreffen sein.

Denkbar ist es aber auch, dass sich - wie ebenfalls schon angesprochen - das System auf die Übertragungsstrecke 2 mit optischer Freiraumübertragung und die an beiden Enden dieser Übertragungsstrecke 3 angeordneten Übertragungsstationen 1, 2 (kombinierte Sende- und Empfangsstationen) beschränkt, wobei dann die Übertragungsstrecke 3 mit optischer Freiraumübertragung den gesamten Übertragungspfad sowie die Bodenstation 1 und die Satellitenstation 2 gleichzeitig eine erste Kommunikationsentität 10 beziehungsweise eine jeweils zweite Kommunikationsentität $11_1$, $11_2$, $11_n$ ausbilden würden. Denkbar ist eine solche Konstellation im Zusammenhang mit einem Satelliten beispielsweise im Hinblick auf eine Übertragungsstrecke 3 (einen Übertragungspfad) zur Übertragung eines Nutzsignals mit Steuerdaten für eine Satellitenstation 2 oder - bidirektional - außerdem zur Übertragung von Messdaten einer Satellitenstation 2 an eine Bodenstation 1 oder - wieder abseits der Satellitentechnik - im Zusammenhang mit der Übertragung von Daten an und von Wetterballons.

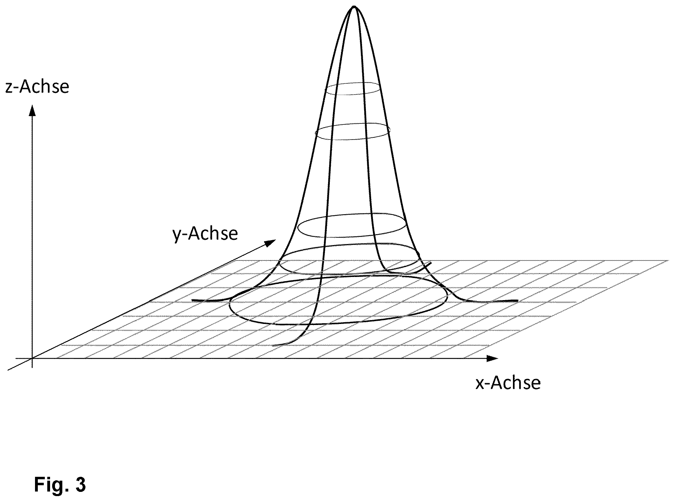

Anhand der Fig. 1 und einer in der Fig. 3 beispielhaft gezeigten Ausprägungsform eines Referenzsignals sollen nochmals Details des Verfahrens erläutert werden. Da sowohl das mit dem Nutzsignal modulierte Trägersignal als auch das optische Signal mit dem Referenzsignal nahezu den absolut gleichen Lichtpfad zwischen Bodenstation 1 und Satellitenstation 2 nehmen, unterliegen beide den exakt gleichen räumlichen und zeitlichen Fluktuationen. Die einzig verbleibende Wechselwirkung, die zu einem Unterschied führen könnte, ist eine Wellenlängenabhängigkeit (zum Bespiel in Form von Änderungen des materialabhängigen Brechungsindexes und komplexerer nichtlinearer Wechselwirkungen). Diese sollte jedoch im Hinblick auf die vorausgesetzte Ähnlichkeit der Signale (optisches Trägersignal mit Nutzsignal, optisches Signal mit Referenzsignal) vernachlässigbar sein.

Empfängerseitig kann man deshalb anhand des - verzerrten - Referenzsignals das Delta zwischen erwartetem Verlauf und tatsächlichem Verlauf berechnen und diese Berechnung dazu nutzen, das ursprüngliche Nutzsignal zu rekonstruieren. Fig. 1 zeigt, wie ausgeführt, ein schematisches Schaltbild, wie die einzelnen Signalströme sich zueinander verhalten und wie sie miteinander zu verarbeiten sind.

Eine mögliche Darstellung des Referenzsignals $S_k$ als ebene Welle mit orts- und zeitabhängiger Amplitude A ist mit Formel/Gleichung (1) wie folgt gegeben:

$$S_k(\vec{x}, t) = A(\vec{x}, t)\, e^{i\vec{k}\vec{x} - i\omega t} \quad (1).$$

Der Einfachheit halber wird man die Amplitude konstant halten, um so alle nachfolgenden Berechnungen zu vereinfachen, es kann aber auch ein lohnenswerter Ansatz sein, gezielt mit variierenden Dynamiken bzw. Intensitäten zu arbeiten oder sogar mit verschiedenen Kombinationen davon (siehe weiter unten). Weiter ist es sinnvoll, die Wellenfront nur in Ausbreitungsrichtung des Signals zu betrachten, die als z-Achse gewählt werden soll, mit ($S_k \sim e^{ikz}$). Senkrecht zur Ausbreitungsrichtung hat dabei das Signal in der Regel einen Gauß-förmigen Intensitätsverlauf wie in Fig. 3 angedeutet. Schaut man "von oben" auf das Referenzsignal, ist es bezüglich der x- und y-Achse symmetrisch. Aber auch hier ist eine Option denkbar, gemäß welcher sich mit asymmetrischen Verteilungen im Endeffekt bessere Ergebnisse erzielen lassen könnten.

Im Allgemeinen wird man empfängerseitig eine Störung des Referenzsignals messen. Grundsätzlich erwartet wird immer noch eine ebene Welle, falls senderseitig ein Referenzsignal in der Form der Gleichung (1) ausgesendet wird, wobei allerdings das empfängerseitig über die Übertragungsstrecke 3 mit Freiraumübertragung eingehende Referenzsignal starke Verzerrungen aufweisen wird. In der Literatur werden die so verzerrten Ergebnisse häufig "speckle" genannt (siehe zum Beispiel Wikipedia, https://en.wikipedia.org/wiki/Speckle_pattern). In der untenstehenden Formel/Gleichung (2) wurde eine additive Störung angenommen, da sich alle über den Strahlengang des optischen Signals aufintegrierten Störungen linear verhalten. Zu beachten ist dabei jedoch, dass jeder einzelne Beitrag zur Gesamtstörung durchaus nichtlineare Anteile enthalten kann, wobei aber die integrale Wirkung auf das Signal proportional zur Dauer der Wechselwirkung und damit zur Länge des Lichtpfades (der Übertragungsstrecke 3 mit Freiraumübertragung) erhalten bleibt (mediumabhängige Schwankungen der Lichtgeschwindigkeit können an dieser Stelle vernachlässig werden).

Zu jedem einzelnen Zeitpunkt ist es ausreichend, nur eine effektive Störung des Referenzsignals zu betrachten. Zusätzlich zur Orts -und Zeitabhängigkeit können aber auch weitere Abhängigkeiten als Funktion der Wellenlänge auftreten (beispielsweise Dispersion). Diese Störungen als Funktion aller anderen Parameter, die als $\mu$ zusammengefasst und somit gewissermaßen abkürzt werden sollen, werden sehr wahrscheinlich hochgradig nichtnichtlinear sein (Kopplungen über material-/mediumabhängige Änderungen des Brechungsindexes). Per Konstruktion und Konvention ist empfängerseitig aber zunächst das ursprüngliche Referenzsignal, also dessen Beschaffenheit bei der Aussendung (Klarsignal) bekannt und es ist möglich, durch Differenzbildung den Störungsterm zu extrahieren. Die so isolierte Störung kann genutzt werden, um das eigentliche beeinträchtigte Nutzsignal zu rekonstruieren:

$$\Delta(\vec{x}, t, \mu) = S_k(\vec{x}, t) - S_g(\vec{x}, t, \mu) = a(\vec{x}, t, \mu)\, e^{-i\varphi(\vec{x}, t, \mu)} \quad (2)$$

Sowohl Amplitude als auch Phase beinhalten nun eine Abhängigkeit nicht nur von Ort und Zeit (*x* und *t*), sondern auch von dem Satz zusätzlicher Parameter $\mu$. Der wesentliche Beitrag dazu wird in allererster Linie von der Wellenlänge kommen.

Eine Erweiterung und noch bessere Eliminierung dieser wellenlängenabhängigen Effekte ist durch folgenden Ansatz möglich: Statt nur ein Referenzsignal parallel zum Nutzsignal zu übertragen, lassen sich mehrere gleichwertige, jeweils Referenzsignale transportierende optische Signale mit Referenzsignalen jeweils oberhalb und unterhalb der Wellenlänge des Trägersignals für das Nutzsignal mitsenden. So kann man sich in der Rekonstruktion noch besser an das jeweils zu extrahierende Nutzsignal annähern. Die "optischen Korrektur" wird somit noch besser gelingen. Wenn man nämlich verschiedene Störterme zur Verfügung hat, lassen sich die einzelnen Anteile nutzen, um auch die nichtlinearen Anteile der Wechselwirkung in geeigneter Weise zu interpolieren.

Vorteile der Erfindung sind:

- Die Erfindung lässt sich leicht in Software und Hardware implementieren und ist dann ohne exorbitanten Rechenaufwand anwendbar. Die durch die Korrektur entstehende zeitliche Verzögerung ist minimal und vernachlässigbar, insbesondere dann, wenn man das Verfahren in Hardware implementiert.
- Der "Overhead" für die digitale Nachverarbeitung hat keine wesentlichen Einbußen in Bezug auf den Energieverbrauch (auch Energie ist im Orbit eine Ressource, die nicht uneingeschränkt zur Verfügung steht) zur Folge.
- Durch die vorgeschlagene Erfindung lassen sich "Optical Feeder" wesentlich günstiger als mit bisher bekannten Verfahren aufbauen und betreiben. Insbesondere kann die Anzahl der Sender und Empfänger verringert werden, wobei gleichzeitig die Signalverarbeitung robuster wird.
- Die Entwicklung der notwendigen Prozessoren (wie beispielsweise der DSPs 5, 5') ist unter Umständen mit einem gewissen Aufwand verbunden. Sobald aber die entsprechenden Masken für die Fertigung einmal entwickelt sind, ist die nachfolgende Chip-Produktion sehr kostengünstig realisierbar.
- Der Ansatz ist nicht auf einen Einsatz von optischer Kommunikation zwischen Bodenstation 1 und Satellitenstation 2 beschränkt, sondern kann auch für andere Plattformen wiederverwendet werden, die mit eingeschränkten räumlichen Ressourcen oder anderen schwierigen Umgebungsbedingungen zurechtkommen müssen. Das betrifft beispielsweise auch die Kommunikation über sogenannte "high altitude networks", zum Beispiel realisiert durch Zeppeline oder Ballons oder im Zusammenspiel mit Drohnen als Relais-Stationen.

**Patentansprüche**

1. Verfahren zur Übertragung eines Nutzsignals, bei welchem das, über einen zwischen einer ersten Kommunikationsentität (10) und einer zweiten Kommunikationsentität ($11_1$, $11_2$, $11_n$) bestehenden Übertragungsweg übertragene Nutzsignal auf mindestens einer optischen Übertragungsstrecke (3) dieses Übertragungsweges mittels eines mit dem Nutzsignal modulierten optischen Trägersignals durch optische Freiraumübertragung übertragen wird und eventuelle, durch auf dieser mindestens einen optischen Übertragungsstrecke (3) auf das optische Trägersignal mit dem Nutzsignal einwirkende äußere Einflüsse auftretende Übertragungsfehler des Nutzsignals korrigiert werden, **dadurch gekennzeichnet, dass** zur Korrektur eventueller Übertragungsfehler des Nutzsignals senderseitig der mindestens einen optischen Übertragungsstrecke (3) mit optischer Freiraumübertragung durch einen Sender (6) gemeinsam mit dem das Nutzsignal transportierenden optischen Trägersignal mindestens ein optisches Signal mit einem hinsichtlich seiner bei der Aussendung gegebenen Beschaffenheit empfängerseitig der mindestens einen optischen Übertragungsstrecke (3) bekannten Referenzsignal ausgesendet wird und dass empfängerseitig der mindestens einen optischen Übertragungsstrecke (3) durch einen Vergleich des aus dem eingehenden Gesamtsignal herausgefilterten Referenzsignals mit dessen bei seiner Aussendung bekannter Beschaffenheit ein Korrektursignal errechnet wird, mittels welchem das ebenfalls aus dem eingehenden Gesamtsignal herausgefilterte Nutzsignal korrigiert wird.

2. Verfahren nach Anspruch 1, **dadurch gekennzeichnet, dass** zur breitbandigen Anbindung von Teilnehmern an das Internet eine bidirektionale Übertragung von Nutzsignalen zwischen dem Internet, als der ersten Kommunikationsentität (10), und den Teilnehmern, als der jeweiligen zweiten Kommunikationsentität ($11_1$, $11_2$, $11_n$), über mindestens eine über Kabel an das Internet angebundene Bodenstation (1) und eine Satellitenstation (2) erfolgt, wobei die Übertragung der Nutzsignale zumindest auf der Übertragungsstrecke (3) zwischen der mindestens einen Bodenstation (1) und der Satellitenstation (2) in beiden Übertragungsrichtungen durch optische Freiraumübertragung erfolgt und dass sowohl seitens der mindestens einen Bodenstation (1) als auch seitens der Satellitenstation (2) jeweils eine gemeinsame Aussendung des jeweiligen, ein Nutzsignal transportierenden optischen Trägersignals und des mindestens einen optischen Signals mit dem Referenzsignal sowie eine Korrektur des jeweils aus dem eingehenden Gesamtsignal herausgefilterten Nutzsignals mittels des durch den Vergleich des jeweils aus dem eingehenden Gesamtsignal herausgefilterten Referenzsignals mit dessen bei der Aussendung bekannter Beschaffenheit errechneten Korrektursignals erfolgen.

3. Verfahren nach Anspruch 1 oder 2, **dadurch gekennzeichnet, dass** die Intensität des mindestens einen optischen Signals mit dem Referenzsignal annähernd der Intensität des das Nutzsignal transportierenden optischen Trägersignals entspricht.

4. Verfahren nach einem der Ansprüche 1 bis 3, **dadurch gekennzeichnet, dass** das mindestens eine, das Referenzsignal transportierende optische Signal eine von der Wellenlänge des Trägersignals für die Nutzdaten abweichende, jedoch um maximal 10 % höhere oder niedrigere Wellenlänge aufweist.

5. Verfahren nach einem der Ansprüche 1 bis 4, **dadurch gekennzeichnet, dass** auch in dem mindestens einen Referenzsignal Daten kodiert sind, welche erforderlichenfalls zur Widerherstellung der Synchronisation zwischen dem Trägersignal für das Nutzsignal und dem mindestens einen optischen Signal mit dem Referenzsignal genutzt werden.

6. Verfahren nach einem der Ansprüche 1 bis 5, **dadurch gekennzeichnet, dass** gemeinsam mit dem das Nutzsignal transportierenden Trägersignal mehrere optische Signale mit je einem Referenzsignal ausgesendet und empfängerseitig zur Ableitung eines Korrektursignals genutzt werden.

7. Verfahren nach Anspruch 6, **dadurch gekennzeichnet, dass** die Wellenlänge mindestens eines ein Referenzsignal transportierenden optischen Signals kleiner und die Wellenlänge mindestens eines anderen, ein Referenzsignal transportierenden optischen Signals größer ist als die Wellenlänge des optischen Trägersignals für das Nutzsignal.

8. System zur Übertragung von Nutzsignalen, mit einer ersten Kommunikationsentität (10) und einer zweiten Kom-munikationsentität ($11_1$, $11_2$, $11_n$) und mit einem Übertragungsweg zur Übertragung eines Nutzsignals zwischen der ersten Kommunikationsentität (10) und der zweiten Kommunikationsentität ($11_1$, $11_2$, $11_n$) in zumindest einer Übertragungsrichtung, wobei das Nutzsignal auf mindestens einer optischen Übertragungsstrecke (3) des Übertragungsweges zwischen zwei Übertragungsstationen (1, 2) mittels eines mit dem Nutzsignal modulierten optischen Trägersignals durch optische Freiraumübertragung übertragen wird und wobei entweder eine der Übertragungsstationen (1, 2) als Sendestation und die andere der Übertragungsstationen (1, 2) als Empfangsstation oder, im Falle einer Übertragung von Nutzdaten in beiden Übertragungsrichtungen, beide Übertragungsstationen (1, 2) als Sende- und Empfangsstation ausgebildet sind, **dadurch gekennzeichnet, dass** die Übertragungsstationen (1, 2) zur Korrektur eventueller, durch äußere Einflüsse auf der mindestens einen optischen Übertragungsstrecke (3) mit Freiraumübertragung entstehender Übertragungsfehler eines Nutzsignals ausgebildet sind und dass dazu eine als Sendestation ausgebildete Übertragungsstation (1, 2) umfasst

- mindestens einen optischen Sender (6), ausgebildet zur gemeinsamen Aussendung eines optischen Trägersignals mit einem Nutzsignal und mindestens eines optischen Signals mit einem, hinsichtlich seiner bei der Aussendung gegebenen Beschaffenheit empfängerseitig, das heißt seitens der jeweils anderen Übertragungsstation (1, 2) bekannten Referenzsignal und
- mindestens zwei Signalquellen 4, 4'), nämlich eine erste Signalquelle (4) für das Nutzsignal und mindestes eine zweite Signalquelle (4') zur Erzeugung und Ausgabe eines Referenzsignals und
- einen oder mehrere Signalprozessoren (5, 5') zur Verarbeitung der Ausgangssignale der mindestens zwei Signalquellen (4, 4') und zur Ansteuerung des optischen Senders (6) zur gemeinsamen Aussendung eines mit dem Nutzsignal modulierten optischen Trägersignals und mindestens eines optischen Signals mit einem Referenzsignal und
dass dazu eine als Empfangsstation ausgebildete Übertragungsstation (1, 2) umfasst
- einen Empfänger (7) und ein Filter (8), ausgebildet zum Ausfiltern einerseits des Nutzsignals und andererseits des mindestens einen Referenzsignals aus dem vom Empfänger (7) der Übertragungsstation (1, 2) empfangenen Gesamtsignal und
- eine Verarbeitungseinrichtung (9), ausgebildet zur Errechnung eines Korrektursignals durch Vergleichen des mindestens einen aus dem empfangenen Gesamtsignal herausgefilterten Referenzsignals mit dessen bei seiner Aussendung bekannter Beschaffenheit sowie zur Korrektur des aus dem Gesamtsignal herausgefilterten Nutzsignals durch Anwendung dieses Korrektursignals auf das Nutzsignal.

9. System nach Anspruch 8, **dadurch gekennzeichnet, dass** das System zur breitbandigen satellitengestützten Anbindung von Teilnehmern an das Internet ausgebildet ist, mit einem bidirektionalen Übertragungsweg zur Übertragung von Nutzsignalen zwischen dem Internet, als der ersten Kommunikationsentität (10), und den Teilnehmern, als der jeweiligen zweiten Kommunikationsentität ($11_1$, $11_2$, $11_n$), wobei der Übertragungsweg zwischen einer über Kabel an das Internet angebundenen Bodenstation (1) und einer Satellitenstation (2) eine Übertragungsstrecke (3) mit optischer Freiraumübertragung umfasst und wobei sowohl die Bodenstation (1) als auch die Satellitenstation (2) jeweils eine kombinierte Sende- und Empfangsstation ausbilden oder eine solche umfassen.

Fig. 1

**Fig. 2**

**Fig. 3**

**Europäisches Patentamt**
**European Patent Office**
**Office européen des brevets**

## EUROPÄISCHER RECHERCHENBERICHT

Nummer der Anmeldung

EP 19 21 7616

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 161 006 A2 (NORTHROP GRUMMAN CORP) 5. Dezember 2001 (2001-12-05) <br> * Absatz [0018] - Absatz [0020]; Abbildungen 2,3,12 * <br> * Absatz [0006] * <br> * Absatz [0050] - Absatz [0052] * <br> * Absatz [0023] - Absatz [0025] * <br> ----- | 1-9 | INV. <br> H04B10/112 <br> H04B10/118 |
| A | WO 2018/231152 A1 (TRANSCELESTIAL TECH PTE LTD [SG]) 20. Dezember 2018 (2018-12-20) <br> * Absatz [0057] - Absatz [0058]; Abbildungen 11,13,14 * <br> * Absatz [0062] - Absatz [0063] * <br> * Absatz [0085] - Absatz [0089] * <br> ----- | 1-9 | |
| A | EP 1 475 905 A2 (DEUTSCH ZENTR LUFT & RAUMFAHRT [DE]) 10. November 2004 (2004-11-10) <br> * Absatz [0001] - Absatz [0007]; Ansprüche 1,7; Abbildung 2 * <br> * Absatz [0016] - Absatz [0019] * <br> ----- | 1-9 | |
| A | DE 10 2014 206668 A1 (DEUTSCHES ZENTRUM FÜR LUFT UND RAUMFAHRT E V [DE]) 9. Oktober 2014 (2014-10-09) <br> * Absatz [0001] - Absatz [0008]; Anspruch 2 * <br> ----- | 1-9 | |

**RECHERCHIERTE SACHGEBIETE (IPC)**

H04B

Der vorliegende Recherchenbericht wurde für alle Patentansprüche erstellt

| Recherchenort | Abschlußdatum der Recherche | Prüfer |
|---|---|---|
| München | 23. Juni 2020 | Gäde, Sebastian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 7616

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2020

| Im Recherchenbericht angeführtes Patentdokument | Datum der Veröffentlichung | Mitglied(er) der Patentfamilie | Datum der Veröffentlichung |
|---|---|---|---|
| EP 1161006 A2 | 05-12-2001 | DE 60131322 T2<br>EP 1161006 A2<br>JP 3753952 B2<br>JP 2002051010 A<br>US 6585432 B1 | 03-04-2008<br>05-12-2001<br>08-03-2006<br>15-02-2002<br>01-07-2003 |
| WO 2018231152 A1 | 20-12-2018 | CN 110999129 A<br>EP 3639410 A1<br>WO 2018231152 A1 | 10-04-2020<br>22-04-2020<br>20-12-2018 |
| EP 1475905 A2 | 10-11-2004 | AT 353500 T<br>DE 10320814 A1<br>EP 1475905 A2 | 15-02-2007<br>09-12-2004<br>10-11-2004 |
| DE 102014206668 A1 | 09-10-2014 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **C. FUCHS et al.** Transmitter Diversity with Phase-Division for Optical Feeder links. *ITG Fachbericht Photonische Netze,* 2019, 19